# EUROPÄISCHE PATENTANMELDUNG

(11) **EP 1 220 554 A1**
(43) Veröffentlichungstag der Anmeldung: **03.07.2002**
(21) Anmeldenummer: 00128651.7
(22) Anmeldetag: 28.12.2000
(51) Int. Cl.: H04Q 7/30, H04L 29/08

(54) **Verfahren zur Datenübertragung zwischen verschiedenen Einhei-ten eines Funkkommunicationssystems und dafür eingerichtetes Basisstationssystem und Funkkommunikationssystem**

(71) Anmelder: SIEMENS AKTIENGESELLSCHAFT, 80333 München (DE)
(72) Erfinder: Ball, Carsten, Dr., 76764 Rheinzabern (DE); Singer, Josef, 86807 Buchloe (DE); Stark, Thomas, 81476 München (DE)

(57) **Zusammenfassung**

Zur Datenübertragung zwischen zwei verschiedenen Einheiten eines Funkkommunikationssystems, zum Beispiel einer Basisstation (BTS') und einer Basisstationssteuerung (BSC') werden in unterschiedlichen Kanälen übertragene Daten zu einem Datenpaket (DB1) zusammengefasst, das zwischen den Einheiten übertragen wird. Das Datenpaket (DB1) enthält eine Kopfinformation (KI) und für jeden Kanal eine Kanalsteuerinformation (KSI1, KSI2, KSI3), aus der mindestens hervorgeht, ob im jeweiligen Kanal Nutzdaten übertragen werden. Ferner enthält das Datenpaket (DB1) die im jeweiligen Kanal übertragenen Nutzdaten (ND1, ND2, ND3).

## Beschreibung

Verfahren zur Datenübertragung zwischen verschiedenen Einheiten eines Funkkommunikationssystems und dafür eingerichtetes Basisstationssystem und Funkkommunikationssystem

Funkkommunikationssysteme dienen der Übertragung von Daten mit Hilfe von elektromagnetischen Wellen über eine Funkschnittstelle zwischen einer sendenden und einer empfangenen Funkstation. Ein Beispiel für ein Funkkommunikationssystem ist das bekannte GSM-Mobilfunknetz, bei dem zur Übertragung eines Teilnehmersignals jeweils ein durch einen schmalbandigen Frequenzbereich und einen Zeitschlitz gebildeter Kanal vorgesehen ist. Da sich ein Teilnehmersignal in einem Kanal in Frequenz und Zeit von den übrigen Teilnehmersignalen unterscheidet, kann die empfangende Funkstation eine Detektion der Daten dieses Teilnehmersignals vornehmen. In neueren Funkkommunikationssystemen, wie zum Beispiel dem UMTS-System, werden die einzelnen Teilnehmer darüber hinaus durch unterschiedliche Spreizcodes unterschieden.

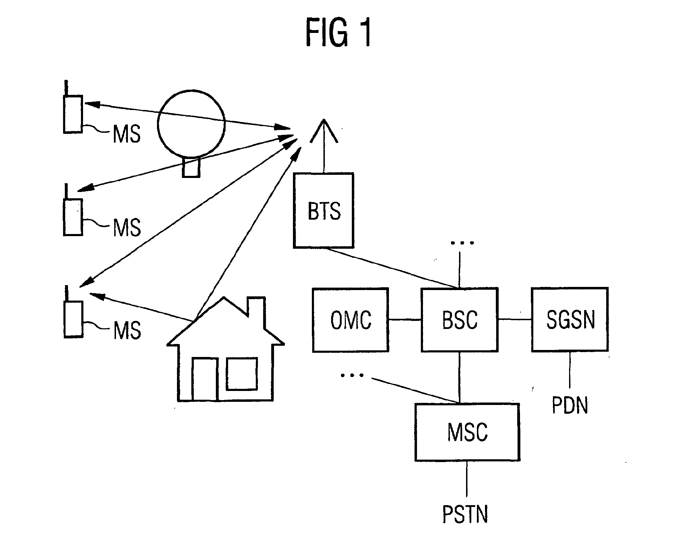

Ein bekanntes GSM-Mobilfunknetz, das anhand des in Figur 1 dargestellten Blockschaltbildes erläutert wird, umfasst eine Vielzahl von Mobilvermittlungsstellen MSC, die untereinander vernetzt sind bzw. die den Zugang zu einem Festnetz PSTN herstellen. Ferner sind diese Mobilvermittlungsstellen MSC mit jeweils einer Basisstationssteuerung BSC verbunden. Jede Basisstationssteuerung BSC ermöglicht wiederum eine Verbindung zu mindestens einer Basisstation BTS und nimmt die Verwaltung der funktechnischen Ressourcen der angeschlossenen Basisstationen BTS vor. Eine solche Basisstation BTS ist eine Funkstation, die über eine Funkschnittstelle, auch Luftschnittstelle oder terrestrisches Interface genannt, eine Nachrichtenverbindung zu Mobilstationen MS aufbauen kann. Zur Übertragung von paketvermittelten Daten ist die Basisstationssteuerung BSC darüber hinaus mit einem Paketdatendienstknoten (Serving GPRS Support Note) SGSN verbunden, der den Zugang zu einem Festdatennetz PDN herstellt. Ein Operations- und Wartungszentrum OMC realisiert Kontroll- und Wartungsfunktionen für das Mobilfunknetz bzw. für Teile davon. Die Funktionalität dieser Struktur ist auch auf andere Funkkommunikationssysteme übertragbar, in denen die Erfindung zum Einsatz kommen kann. Basisstation, Basisstationssteuerung, Mobilvermittlungsstelle, Operations- und Wartungszentrum, Paketdatendienstknoten und Ähnliches, werden vielfach als Einheiten des Funkkommunikationssytems bezeichnet.

Zur Datenübertragung über die Luftschnittstelle eines Funkkommunikationssystems werden Daten in Funkblöcke unterteilt, die jeweils Signalisierungs- und Nutzdaten aufweisen. Die Signalisierungsdaten werden üblicherweise in einer Kopfinformation (sogenannter Header) zusammengefasst, der den eigentlichen Nutzdaten vorangestellt ist. Im heutigen GSM-System werden je Zeitschlitz auf der Luftschnittstelle alle 20 ms 320 Bit lange Rahmen, sogenannte 16 kbps-Zeitschlitze, zwischen den Einheiten des Funkkommunikationssystem, zum Beispiel zwischen der Basisstation und der Basisstationssteuerung auf dem sogenannten A_{bis} Interface, ausgetauscht, welche inband signalisierte Steuerinformationen sowie die Signalisierungs- und Nutz-Daten für die Funkblöcke enthalten. Die Daten können dabei sowohl Sprachdaten, als auch Paketdaten sein. Im Fall von Sprachdaten spricht man von sogenannten 320bit langen TRAU-Frames und im Fall von Paketdaten von sogenannten PCU-Frames.

In modernen Funkkommunikationssystemen, zum Beispiel GPRS oder EGPRS, enthalten die Funkblöcke, die zur Datenübertragung auf der Luftschnittstelle gebildet werden, so viele Signalisierungs- und Nutz-Daten, dass ein einzelner 16 kbps-Zeitschlitz für die Übertragung der Datenmenge nicht ausreichend ist. In diesem Fall müssen dynamisch je nach Bedarf mehrere 16 kbps-Zeitschlitze verknüpft werden.

Werden in einem Funkkommunikationssystem zwischen zwei Einheiten, zum Beispiel einer Basisstation und einer Basisstationssteuerung, Paketdaten unterschiedlicher Länge übertragen, so muss auf der Schnittstelle zwischen den beiden Einheiten stets eine Kapazität für die längsten Datenpakete vorgehalten werden. Werden zum Beispiel auf ein und demselben Paketdaten-Kanal PDCH (Packet Data Channel) auf der Luftschnittstelle im Multiplexbetrieb Daten, die nach EGPRS MCS7,..., MCS9 kodiert sind und auf dem terrestrischen Interface vier bzw. fünf 16 kbps-Zeitschlitze erfordern, gleichzeitig mit Daten, die nach GPRS CS1/CS2 bzw. EGPRS MCS1/MCS2 kodiert sind und nur einen 16 kbps-Zeitschlitz erfordern, übertragen, so müssen für diesen Kanal für beide Teilnehmer jeweils fünf 16 kbps-Zeitschlitze reserviert werden. Im Fall der Daten, die nach MCS1/MCS2 kodiert sind, werden dann vier leere Zeitschlitze übertragen. Dadurch wird Übertragungskapazität auf dem terrestrischen Interface vergeudet. Darüberhinaus ist die Kodierung der Funkblöcke z.B. GPRS CS1,...., CS4 und EGPRS MCS1,..., MCS9 optimal an die Übertragungsverhältnisse der Luftschnittstelle angepasst, was jedoch nicht optimal zur n x 16kbps Granularität des terrestrischen Interfaces passt. Dort müssen TRAU- bzw. PCU-Frames oftmals mittels spare-Bits aufgefüllt werden.

Des weiteren müssen auch im Fall eines leitungsvermittelten Sprachkanals TRAU-Frames übertragen werden, selbst wenn auf der Luftschnittstelle im Fall von Sprachpausen (DTX = discontinuous transmission) keine Informationen übertragen werden. Dadurch wird ebenfalls Übertragungskapazität auf dem terrestrischen Interface vergeudet.

Eine Lösung zur besseren Kapazitätsausnutzung auf dem terrestrischen Interface besteht beispielsweise darin, anstelle einer PCM24/30 basierten Schnittstelle im Zeitmultiplex mit der festen bzw. dynamischen Zuordnung von n x 16kbps Zeitschlitzen pro Kanal auf der Luftschnittstelle ein sogenanntes Paketdateninterface beispielsweise auf Basis von IP (Internet Protocol) einzuführen. Dabei fügt man die Nutz-Daten eines heutigen 320bit großen TRAU-Frames bzw. PCU-Frames in ein IP Paket ein, die wiederum mit einem sogenannten IP-Header versehen werden. Auf dem Interface werden auf einer gemeinsamen Übertragungskapazität nur noch dann IP-Pakete zwischen den Einheiten des Mobilfunknetzes übertragen, wenn diese auch wirklich übertragen werden müssen, d.h. im Fall von Sprachpausen werden keine Daten für den speziellen Kanal übertragen.

Ein Nachteil des IP-Verfahrens ist, dass der Paket-Header mit IP/UDP/RTP/PPP-Header etwa 520Bits groß ist. Damit wird das Verfahren ineffizient, da letztendlich der Anteil Nutzdaten zu Paket-Header bei Sprachdaten nur noch ca. 270bit/520bit = 52 % bzw. bei GPRS CS1 Paketdaten nur noch ca. (160bit Nutzdaten (Payload) + 24bit RLC-Header)/520bit = 35 % beträgt. Damit gehen alle oben genannten Vorteile, wie z.B. durch den statistischen Gewinn, verloren. Selbst der Einsatz von komprimierten Paket-Headern, die dann anstelle 520bit nur noch ca. 80bit benötigen, stellt immer noch einen großen Overhead dar, der die theoretisch zu erzielenden Gewinne drastisch reduziert.

Der Erfindung liegt daher das Problem zugrunde, ein Verfahren zur Datenübertragung zwischen verschiedenen Einheiten eines Funkkommunikationssystems anzugeben, bei dem die zur Verfügung stehende Gesamtkapazität zwischen den verschiedenen Einheiten besser ausgenutzt wird. Darüber hinaus soll ein Basisstationssystem und ein Funkkommunikationssystem angegeben werden, in dem das erfindungsgemäße Verfahren abläuft.

Dieses Problem wird gelöst durch ein Verfahren gemäß Anspruch 1, sowie ein Basisstationssytem gemäß Anspruch 19 und ein Funkkommunikationssystem gemäß Anspruch 20. Weitere Ausgestaltungen der Erfindung gehen aus den Unteransprüchen hervor.

Zur Datenübertragung zwischen verschiedenen Einheiten eines Funkkommunikationssystems werden Daten, die in unterschiedlichen Kanälen auf der Luftschnittstelle übertragen werden, zu einem größeren gemeinsamen Datenpaket zusammengefasst. Dieses Datenpaket wird zwischen zwei verschiedenen Einheiten des Funkkommunikationssystems übertragen. Das Datenpaket enthält eine Kopfinformation. Ferner enthält das Datenpaket für die Daten eines jeden Kanals zusätzlich eine Kanalsteuerinformation. Die Kanalsteuerinformation enthält mindestens eine Information darüber, ob die Daten im jeweiligen Kanal Nutzdaten enthalten. Außerdem kann die Kanalsteuerungsinformation Angaben über den Zielkanal wie beispielsweise Sender/Empfänger (Transceiver TRX)-Nummer, Zeitschlitznummer, Zeitrahmen-(Frame)nummer sowie Angaben über die Art und Länge der Nutzdaten beispielsweise GPRS/EGPRS Daten, Sprache, HSCSD/ECSD, Codier Schema usw. enthalten. Ferner enthält das Datenpaket die im jeweiligen Kanal übertragenen Nutzdaten.

Das Verfahren hat den Vorteil, dass nur tatsächlich vorhandene Nutzdaten übertragen werden können. Enthalten die Daten eines Kanals keine Nutzdaten, so wird dieses über die Information in der zugehörigen Kanalsteuerinformation übertragen. Es ist nicht erforderlich, dass zusätzlich leere Rahmen übertragen werden. Der in dem Datenpaket für die einzelnen Kanäle belegte Platz ist daher unterschiedlich und an die Bedürfnisse der Datenübertragung in den einzelnen Kanälen angepasst. Dadurch wird die Übertragungskapazität zwischen den verschiedenen Einheiten effizienter ausgenutzt. Ein Datenpaket braucht nur dann nicht gesendet werden, wenn alle Kanäle keine Funkpakete zu übertragen haben. Dafür ist die Wahrscheinlichkeit jedoch nicht sehr groß, so dass das oben beschriebene Verfahren auch vorteilhaft ist zur Aufrechterhaltung der Synchronität etwa zwischen Basisstation und Basisstationssteuerung.

Ein weiterer Vorteil des Verfahrens liegt darin, dass das Verhältnis von Kopfgröße zu den Nutzdaten deutlich verbessert wird, da die Kopfinformation nur einmal übertragen wird und dabei gleichzeitig für mehrere Kanäle gilt.

Die Kopfinfomation kann dabei in einem Standardformat, insbesondere als IP-Header mit oder ohne Kompression oder als Frame Relay Header, ATM-Header oder auch in einem proprietären Format vorliegen.

Es liegt im Rahmen der Erfindung, das Verfahren auf die Datenübertragung zwischen unterschiedlichen Einheiten des Funkkommunikationssystems, insbesondere zwischen einer Basisstation und einer Basisstationssteuerung, einer Basisstationssteuerung und einer Transkodiereinheit (transcoding and rate adaptation unit), einer Transkodiereinheit und einer Mobilvermittlungsstelle oder einer Basisstationssteuerung und einem Paketdatendienstknoten anzuwenden. Im GSM-Kommunikationssystem entspricht dieses den Schnittstellen A_{BIS}, A_{SUB}, A, sowie G_{B}.

Da in dem Verfahren nur Nutzdaten übertragen werden, ergeben sich Datenpakete variabler Länge, je nachdem wieviele Kanäle auf der Luftschnittstelle im Moment Funkblöcke übertragen. Die Länge des Datenpakets hängt ebenfalls von der Anzahl der Nutzdaten pro Kanal auf der Luftschnittstelle ab, d.h. vom gerade auf dem Kanal gefahrenen Service. Die Bandbreite der A_{bis}-Schnittstelle bzw. A_{SUB}-Schnittstelle, A- Schnittstelle sowie G_{B}-Schnittstelle kann daher geringer eingestellt werden. Die eingestellte Bandbreite entspricht der im Mittel zu übertragenden Kapazität. Da für die in dem Datenpaket zusammengefassten Kanäle jeweils nur eine Kopfinformation (Header) übertragen wird, reduziert sich die für die Kopfinformation beanspruchte Kapazität im Vergleich zu den bekannten Verfahren, bei denen der Kopf bei jedem kleinen Datenpaket mitzuübertragen ist. In dem Verfahren wird die nötige Signalisierung gleichzeitig mitübertragen. Die Zeitlagensteuerung (Time Alignment, Synchronisierung) erfolgt in dem Verfahren gleichzeitig für die Kanäle, deren Daten in dem Datenpaket zusammengefasst werden.

Bei GPRS/EGPRS-Paketdatenkanälen vereinfacht sich die Zuweisung der Übertragungskapazitäten durch die Paketsteuerungseinheit, da Teilnehmer mit unterschiedlichen Kodierschemata und damit unterschiedlicher Funkblocklänge gemeinsam übertragen werden können. Dadurch ist auch ein Wechsel des Kodierschemas während einer Verbindung (Link Adaptation) leichter möglich. Einzig und allein die Paketlängen ändern sich. Das Resourcen Management in der Basisstationssteuerung muss daher bei der Zuweisung von Teilnehmern auf Kanäle der Luftschnittstelle deren Service-Art, evtl. deren momentanes Codier Schema sowie die Verfügbarkeit von n x 16kbps Zeitschlitzen auf dem terrestrischen Interface nicht mehr berücksichtigen.

Um die Ausnutzung der Kapazität weiter zu steigern, liegt es im Rahmen der Erfindung, dass die Kopfinformation Informationen enthält, die für alle Kanäle gelten, deren Daten in dem Datenpaket zusammengefasst werden. Dieses kann insbesondere eine (Ziel-)Adresse der empfangenden Einheit oder evtl. Absendeadresse der sendenden Einheit sein. Sendende und empfangende Einheit können dabei durchaus Subeinheiten einer Basisstation bzw. Basisstationssteuerung sein wie z.B. ein Sender/Empfänger (Transceiver TRX), eine Paketdatensteuerung (PCU), etc. oder die Basisstation oder die Basisstationsteuerung selbst. Ferner enthält die Kanalsteuerinformation nur für diejenigen Kanäle, in denen die Daten Nutzdaten enthalten, mindestens eine Information, die zur Zuordnung der Daten im jeweiligen Kanal geeignet ist.

Weiterhin ist es im Hinblick auf die effiziente Nutzung der Kapazität vorteilhaft, in der Kanalsteuerinformation nur für diejenigen Kanäle, in denen die Daten Nutzdaten enthalten, eine Information über die Nutzdatenart bzw. Service-Art vorzusehen. Zusätzlich kann eine Längeninformation enthalten sein über die Länge der folgenden Nutzdaten pro Kanal, diese Information kann jedoch auch bereits in der Nutzdatenart kodiert sein.

Erfolgt die Datenübertragung nach einem Frequenzmultiplexverfahren, bei dem für die Übertragung mehrere Frequenzfenster zur Verfügung stehen, so liegt es im Rahmen der Erfindung, die Daten von Kanälen, denen unterschiedliche Frequenzfenster zugeordnet sind, in dem Datenpaket zusammenzufassen. In diesem Fall ist es zweckmäßig, für diejenigen Kanäle, in denen die Daten Nutzdaten enthalten, eine Information über das dem Kanal zugeordnete Frequenzfenster in der Kanalsteuerinformation vorzusehen.

Erfolgt die Datenübertragung nach einem Zeitmultiplexverfahren, bei dem jedem Kanal ein Zeitschlitz eines Zeitrahmens zugeordnet wird, so liegt es im Rahmen der Erfindung, die Daten von Kanälen, die aufeinanderfolgenden Zeitschlitzen zugeordnet sind, in dem Datenpaket zusammenzufassen. Es ist vorteilhaft, in diesem Fall in der Kanalsteuerinformation für diejenigen Kanäle, in denen die Daten Nutzdaten enthalten, eine Information über den dem Kanal zugeordneten Zeitschlitz vorzusehen. Ferner ist es zweckmäßig, in der Kopfinformation eine Information über den Zeitrahmen vorzusehen, mit der ein Sendezeitpunkt der Daten in den einzelnen Kanälen gesteuert wird.

Erfolgt die Datenübertragung nach einem Zeit- und Frequenzmultiplexverfahren wie beispielsweise GSM, bei dem für die Übertragung mehrere Frequenzfenster zur Verfügung stehen, und bei dem in jedem Frequenzfenster den Kanälen je ein Zeitschlitz eines Zeitrahmens zugeordnet ist, so liegt es im Rahmen der Erfindung, die Daten von Kanälen, die in verschiedenen Frequenzfenstern demselben Zeitschlitz zugeordnet sind, in dem Datenpaket zusammenzufassen. Dies ist insbesondere für GSM-Basisstationen mit mehreren Sender/Empfängern( Transceiver TRX) von Vorteil, bei denen der gleiche Zeitschlitz auf verschiedenen Sender/Empfängern( Transceiver TRX) zur selben Zeit auf der Luftschnittstelle gesendet/empfangen wird, da das Datenpaket entsprechend seiner Zeitlage alle diese Daten gleichzeitig überträgt.

Fuer GSM-Basisstationen mit nur einem Sender/Empfänger (Transceiver TRX) ist es vorteilhaft, in einem Datenpaket die Nutzdaten für mehrere Kanäle auf hintereinanderfolgenden Zeitschlitzen zu übertragen.

Erfolgt die Datenübertragung nach einem CDMA-Verfahren, bei dem jedem Kanal ein Spreizcode zugeordnet wird, so werden in dem Datenpaket die Daten von Kanälen, denen unterschiedliche Spreizcodes zugeordnet sind, zusammengefasst. In einem gemischten TDMA und CDMA Verfahren wie beispielsweise TD-SCDMA ist es vorteilhaft, die Nutzdaten von Kanälen mit unterschiedlichen Spzeizcodes jedoch demselben TDMA-Zeitschlitz gemeinsam im selben Datenpaket zu übertragen.

Die Kopfinformation und die Kanalsteuerinformationen erlauben es der empfangenden Einheit, die Daten ihren Kanälen wieder zuzuordnen. Ist auch die Framenummer enthalten, weiß die empfangene Einheit auch den exakten Sende-/Empfangszeitpunkt. Bei den Daten kann es sich dabei sowohl um Sprachdaten, als auch um Paketdaten handeln. Sprachdaten und Paketdaten können dabei sowohl in einem standardisierten Format, wie zum Beispiel, TRAU-Rahmen, IP-Pakete oder Frame Relay-Pakete, als auch in proprietären Formaten vorliegen.

Figur 1 zeigt ein bekanntes GSM-Mobilfunksystem bestehend aus einer oder mehreren Basisstationen, Basisstationssteuerungen, Mobilvermittlungsstellen, Paketdatendienstknoten und Teilnehmerstationen.

Figur 2 zeigt einen Ausschnitt aus einem Mobilfunksystem, in dem die Datenübertragung zwischen einer Basisstation und einer Basisstationssteuerung nach dem erfindungsgemäßen Verfahren erfolgt.

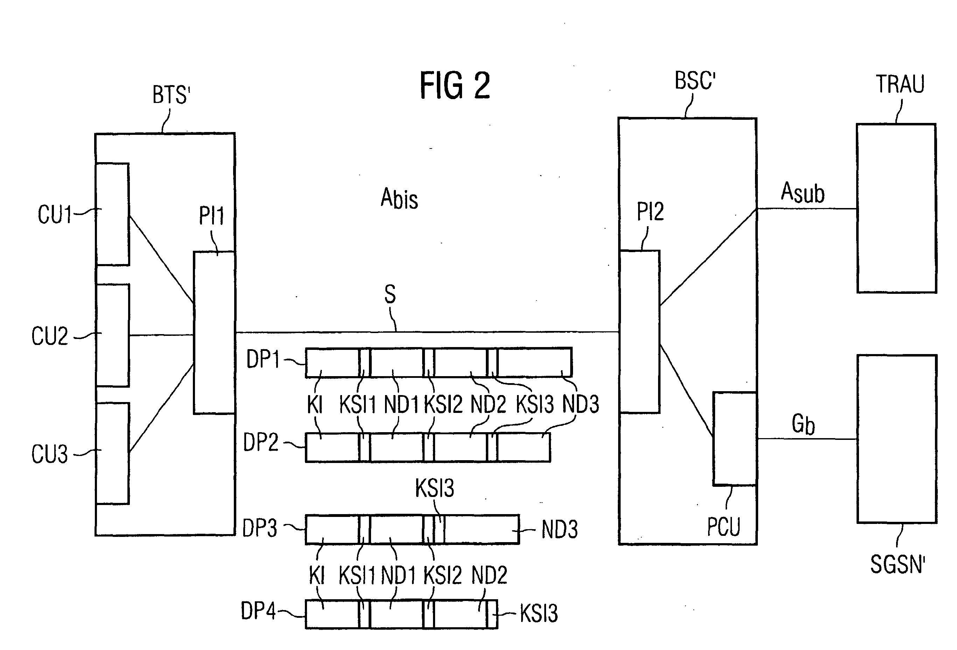

Ein Mobilfunksystem umfasst eine Basisstation BTS' (siehe Figur 2), die drei Trägerfrequenzeinheiten (carrier unit) CU1, CU2, CU3 bzw. Sender/Empfänger (Transceiver TRX, nicht dargestellt) und ein Paketinterface PI1 enthält. Die Trägerfrequenzeinheiten CU1, CU2, CU3, sind jeweils mit dem Paketinterface PI1 verbunden. Das Funkkommunikationssystem umfasst darüber hinaus eine Basisstationssteuerung BSC', die ebenfalls ein Paketinterface PI2 und die eine Paketdatensteuereinheit PCU aufweist. Alternativ könnte die Paketdatensteuereinheit PCU vollstaendig oder partiell in der Basisstation BTS' implementiert werden. Die Basisstationssteuerung BSC' ist mit einer Transkodiereinheit TRAU über eine Schnittstelle A_{SUB} verbunden. Ferner ist die Basisstationssteuerung BSC' über eine Schnittstelle G_{b} mit einem Paketdatendienstknoten SGSN' verbunden. Der Paketdatendienstknoten SGSN' ist dabei direkt mit der Paketsteuerungseinheit PCU verbunden. Im Falle der PCU Implementierung bzw. Teilimplementierung in der Basisstation BTS' ist der Paketdatendienstknoten SGSN' an der Basisstationssteuerung BSC' angeschlossen bzw. ebenfalls an der Paketsteuerungseinheit PCU in der Basisstation BTS'.

Die Basisstation BTS' und die Basisstationssteuerung BSC' sind über eine Übertragungsstrecke S verbunden. Diese Verbindung wird auch als A_{BIS}-Schnittstelle bezeichnet. Die Übertragungsstrecke S ist zum Beispiel als PCM24/30-Leitung ausgebildet, auf der die Übertragung in 16 kbps-Zeitschlitzen erfolgt.

Die Datenübertragung in dem Funkkommunikationssystem erfolgt nach einem Zeit- und Frequenzmultiplexverfahren. Zur Datenübertragung zwischen der Basisstation und der Basisstationssteuerung werden Sprach-, Paket- bzw. Signalisierungs-Daten, die in unterschiedlichen Kanälen übertragen werden und in Form von Funkblöcken vorliegen, in dem Paketinterface PI1 bzw. PI2 je n Funkblöcke zu einem Datenpaket DBn zusammengefasst. Es werden zum Beispiel die Daten, die über die Trägerfrequenzeinheiten CU1, CU2 und CU3 jeweils im Zeitschlitz TN0 übertragen werden, so zusammengefasst, dass eine Kopfinformation KI die Adresse der Basisstation BTS', eine Rahmennummer (Framenummer), und die Nummer des Zeitschlitzes, das heißt TN0, enthält. Für die Adresse der Basisstation BTS' werden ca. 65 Byte, für die Rahmennummer ca. 3 Byte und für die Zeitschlitznummer ca. 3 Bits benötigt. Ferner enthält das Datenpaket für jeden der Kanäle i, i=1,2,3, eine Kanalsteuerinformation KSIi, aus der hervorgeht, ob im jeweiligen Kanal Nutzdaten übertragen werden. Werden in dem Kanal Nutzdaten übertragen, so enthält die Kanalsteuerinformation darüber hinaus die Nummer der Trägerfrequenzeinheit CUi mit einem Platzbedarf von etwas 5 Bit und eine Information über die Nutzdatenart mit einem Platzbedarf von auch ca. 5 Bit. Als Nutzdatenart kann zum Beispiel angegeben werden, dass es sich um GSM-Sprache, AMR-Sprache und Kodierschema, HSCSD 9.6kbps bzw. 14.4kbps ,ECSD und Kodierschema, GPRS und Kodierschema, EGPRS und Kodierschema oder diskontinuierliche Übertragung handelt. Schließlich enthält das Datenpaket die in dem jeweiligen Kanal übertragenen Nutzdaten NDi. Die Anzahl der Nutzdatenbits bzw. Länge von NDi ergibt sich automatisch aus der Nutzdatenart, könnte jedoch auch explizit mittels der Kanalsteuerinformation angegeben werden.

Aus der Angabe des Zeitrahmens in der Kopfinformation KI ergibt sich der Sendezeitpunkt auf der Luftschnittstelle von der Basisstation zu einer Mobilstation.

Die Kopfinformation KI ist zum Beispiel entsprechend einem IP-Header bzw. FrameRelay-Header formatiert.

Die Datenpakete DPn werden auf der Übertragungsstrecke S nacheinander übertragen. Dazu muss auf der Übertragungsstrecke S mindestens soviel Kapazität reserviert werden, wie der mittleren Paketlänge pro 20ms entspricht. Handelt es sich bei der Übertragungsstrecke S um eine PCM24/30 Leitung, muss eine entsprechende Anzahl von 16kbps Zeitschlitzen zugewiesen werden. In Funkblöcken, in denen auf einem der Kanäle keine Nutzdaten zu übertragen sind, etwa weil auf diesem GSM Zeitschlitz kein Kanal aktiviert ist oder weil bei einem aktiven Kanal wegen diskontinuierlicher Übertragung (DTX) keine Sprachdaten übertragen werden, reduziert sich dabei die Länge des Datenpakets. Werden dagegen zeitgleich auf allen Kanälen die höchsten Kodierschemata gefahren, dann liegen sehr lange Datenpakete vor, die übertragen werden müssen. Die Statistik in einer Zelle über alle Teilnehmer, Kanäle und angebotenen Services gerechnet ergibt dann eine mittlere Paketgröße, welche die Kapazität der Übertragungsstrecke S determiniert. Alternativ zu PCM24/30 Leitungen kann die Übertragungsstrecke S auch als Glasfaserverbindung, Richtfunk- oder Satellitenstrecke oder Power-Line Communication realisiert sein.

In Figur 2 sind die Datenpakete DP1, DP2, DP3, DP4 für 4 Funkblöcke beispielhaft eingezeichnet. Das erste Datenpaket DP1 enthält die Kopfinformation KI, die Kanalsteuerinformation KSI1 des ersten Kanals, die Nutzdaten ND1 des ersten Kanals, die Kanalsteuerinformation KSI2 des zweiten Kanals, die Nutzdaten ND2 des zweiten Kanals sowie die Kanalsteuerinformation KSI3 des dritten Kanals und die Nutzdaten ND3 des dritten Kanals.

Das zweite Datenpaket DP2 enthält die Kopfinformation KI, die Kanalsteuerinformation KSI1 des ersten Kanals, die Nutzdaten ND1 des ersten Kanals, die Kanalsteuerinformation KSI2 des zweiten Kanals, die Nutzdaten ND2 des zweiten Kanals sowie die Kanalsteuerinformation KSI3 des dritten Kanals und die Nutzdaten ND3 des dritten Kanals. Dabei belegen die Nutzdaten ND3 des dritten Kanals weniger Platz als beim ersten Datenpaket DP1, da zum Beispiel ein Wechsel des Kodierschemas beim gleichen Teilnehmer stattgefunden hat oder zwei Teilnehmer mit unterschiedlichen Kodierschemata auf dem selben Kanal gemultiplext sind.

Das dritte Datenpaket DP3 enthält die Kopfinformation KI, die Kanalsteuerinformation KSI1 des ersten Kanals, die Nutzdaten ND1 des ersten Kanals, die Kanalsteuerinformation KSI2 des zweiten Kanals sowie die Kanalsteuerinformation KSI3 des dritten Kanals und die Nutzdaten ND3 des dritten Kanals. Der zweite Kanal enthält keine Nutzdaten, die Nutzdaten des dritten Kanals belegen wie im ersten Datenpaket DP1 einen größeren Platz als im zweiten Datenpaket DP2.

Das vierte Datenpaket DP4 enthält die Kopfinformation KI, die Kanalsteuerinformation KSI1 des ersten Kanals, die Nutzdaten ND1 des ersten Kanals, die Kanalsteuerinformation KSI2 des zweiten Kanals, die Nutzdaten ND2 des zweiten Kanals sowie die Kanalsteuerinformation KSI3 des dritten Kanals. Der dritte Kanal enthält keine Nutzdaten.

Für den Fall, dass bei der Datenübertragung die Daten von Kanälen zusammengefasst werden, denen dieselbe Trägerfrequenz zugeordnet ist, werden die Daten aus Kanälen, denen drei unterschiedliche Zeitschlitze zugeordnet sind, in dem Datenpaket zusammengefasst. Dabei enthält die Kopfinformation wiederum mindestens die Adresse der Basisstation BTS', die Nummer des Zeitrahmens zur Identifizierung des Sendezeitpunkts und die Nummer der Trägerfrequenzeinheit. Die Kanalsteuerinformation für die einzelnen, den verschiedenen Zeitschlitzen zugeordneten Kanäle enthält wiederum jeweils die Information, ob im jeweiligen Kanal Nutzdaten übertragen werden. Ist dieses der Fall, so enthält sie darüber hinaus die Nummer des dem Kanal zugeordneten Zeitschlitzes und eine Information über die Nutzdatenart. Das Datenpaket enthält darüber hinaus die zu übertragenden Nutzdaten. Dabei sind in dem Datenpaket die Kanalsteuerinformation und gegebenenfalls in dem jeweiligen Kanal enthaltene Nutzdaten nacheinander angeordnet.

Eine weitere vorteilhafte Ausgestaltung der Erfindung liegt vor, wenn man die Kopfsteuerinformationen KSI-x der n Kanäle nicht jeweils vor den Nutzdaten des jeweiligen Kanals plaziert, sondern direkt im Anschluss an die Kopfinformation KI überträgt und anschließend erst die jeweiligen Nutzdaten folgen lässt.

## Patentansprüche

1. Verfahren zur Datenübertragung zwischen verschiedenen Einheiten eines Funkkommunikationssystems,
- bei dem in unterschiedlichen Kanälen übertragene Daten zu einem Datenpaket zusammengefasst werden, das zwischen zwei verschiedenen Einheiten übertragen wird,
- bei dem das Datenpaket eine Kopfinformation enthält,
- bei dem das Datenpaket für jeden Kanal eine Kanalsteuerinformation, die mindestens eine Information darüber enthält, ob die Daten im jeweiligen Kanal Nutzdaten enthalten,
- bei dem das Datenpaket die im jeweiligen Kanal übertragenen Nutzdaten enthält.

2. Verfahren nach Anspruch 1,
- bei dem die Kopfinformation Informationen enthält, die für alle Kanäle gelten, deren Daten in dem Datenpaket zusammengefasst werden,
- bei dem die Kanalsteuerinformation für diejenigen Kanäle, in denen die Daten Nutzdaten enthalten, mindestens eine Information enthält, die zur Zuordnung der Daten zum jeweiligen Kanal geeignet ist.

3. Verfahren nach Anspruch 1 oder 2,
bei dem die Kopfinformation eine Information über den Sendebzw. Empfangszeitpunkt auf der Luftschnittstelle enthält.

4. Verfahren nach einem der Ansprüche 1 bis 3,
bei dem die Kopfinformation Informationen zur Zeitlagensteuerung (Time Alignment) der Datenpakete enthält.

5. Verfahren nach einem der Ansprüche 1 bis 4,
- bei dem die Kanalsteuerinformation für diejenigen Kanäle, in denen die Daten Nutzdaten enthalten, eine Information über die Nutzdatenart bzw. den Service enthält.

6. Verfahren nach einem der Ansprüche 1 bis 5,
bei dem die Kanalsteuerinformation für diejenigen Kanäle, in denen die Daten Nutzdaten enthalten, eine Information über die Anzahl der folgenden Nutzdatenbits enthält.

7. Verfahren nach einem der Ansprüche 1 bis 6,
bei dem die Kopfdateninformation eine Adresse der empfangenden Einheit oder der sendenden Einheit enthält.

8. Verfahren nach einem der Ansprüche 1 bis 7 ,
- bei dem die Datenübertragung nach einem Frequenzmultiplexverfahren erfolgt, bei dem für die Übertragung mehrere Frequenzfenster zur Verfügung stehen,
- bei dem die Daten von Kanälen, denen unterschiedliche Frequenzfenster zugeordnet sind, in dem Datenpaket zusammengefasst werden.

9. Verfahren nach Anspruch 8,
- bei dem die Kanalsteuerinformation für diejenigen Kanäle, in denen die Daten Nutzdaten enthalten, eine Information über das dem Kanal zugeordnete Frequenzfenster enthält.

10. Verfahren nach einem der Ansprüche 1 bis 9,
- bei dem die Datenübertragung nach einem Zeitmultiplexverfahren erfolgt, bei dem jedem Kanal ein Zeitschlitz eines Zeitrahmens zugeordnet wird,
- bei dem die Daten von Kanälen, die aufeinanderfolgenden Zeitschlitzen zugeordnet sind, in dem Datenpaket zusammengefasst werden.

11. Verfahren nach einem der Ansprüche 1 bis 9,
- bei dem die Datenübertragung nach einem Zeit- und Frequenzmultiplexverfahren erfolgt, bei dem für die Übertragung mehrere Frequenzfenster zur Verfügung stehen und bei dem in jedem Frequenzfenster den Kanälen je ein Zeitschlitz eines Zeitrahmens zugeordnet ist,
- bei dem die Daten von Kanälen, die in verschiedenen Frequenzfenstern demselben Zeitschlitz zugeordnet sind, in dem Datenpaket zusammengefasst werden.

12. Verfahren nach einem der Ansprüche 1 bis 9,
- bei dem die Datenübertragung nach einem Zeit- und Frequenzmultiplexverfahren erfolgt, bei dem für die Übertragung mehrere Frequenzfenster zur Verfügung stehen und bei dem in jedem Frequenzfenster den Kanälen je ein Zeitschlitz eines Zeitrahmens zugeordnet ist,
- bei dem die Daten von Kanälen, die in demselben Frequenzfenster verschiedenen Zeitschlitzen zugeordnet sind, in dem Datenpaket zusammengefasst werden.

13. Verfahren nach einem der Ansprüche 10 bis 12,
- bei dem die Kanalsteuerinformation für diejenigen Kanäle, in denen die Daten Nutzdaten enthalten, eine Information über den dem Kanal zugeordneten Zeitschlitz enthält,
- bei dem die Kopfinformation eine Information über den Zeitrahmen umfasst, mit der ein Sendezeitpunkt der Daten in den einzelnen Kanälen gesteuert wird.

14. Verfahren nach einem der Ansprüche 1 bis 13,
- bei dem die Datenübertragung nach einem CDMA-Verfahren erfolgt, bei dem jedem Kanal ein Spreizcode zugeordnet wird,
- bei dem die Daten von Kanälen, denen unterschiedliche Spreizcodes zugeordnet sind, in dem Datenpaket zusammengefasst werden.

15. Verfahren nach einem der Ansprüche 1 bis 14,
- bei dem die Datenübertragung nach einem gemischten CDMA-TDMA-Verfahren erfolgt, bei dem jedem Kanal ein Zeitschlitz sowie ein Spreizcode zugeordnet wird,
- bei dem die Daten von Kanälen, denen der gleiche Spreizcode zugeordnet ist und die unterschiedliche Zeitschlitze haben, in dem Datenpaket zusammengefasst werden.

16. Verfahren nach einem der Ansprüche 1 bis 15, bei dem die Daten Sprachdaten, leitungsvermittelte Daten oder Paketdaten umfassen.

17. Verfahren nach einem der vorherigen Ansprüche, bei dem die Kopfinformation einen IP-Header, UDP-Header, RTP-Header, PPP-Header, Frame-Relay-Header, ATM-Header mit oder ohne Komprimierung oder eine Kombination dieser Header enthält.

18. Verfahren nach einem der Ansprüche 1 bis 17, bei dem die Einheiten, zwischen denen die Datenübertragung erfolgt, eine Basisstation und eine Basisstationssteuerung, eine Basisstationssteuerung und eine Transkodiereinheit (transcoding and rate adaptation unit), eine Transkodiereinheit und eine Mobilvermittlungsstelle oder eine Basisstationssteuerung und ein Paketdatendienstknoten sind.

19. Basisstationssystem mit einer Basisstation und einer Basisstationssteuerung,
bei dem die Basisstation und/oder die Basisstationssteuerung und/oder die Transkodiereinheit und/oder die Mobilvermittlungsstelle und/oder der Paketdatendienstknoten ein Paketinterface aufweisen, das ein Verfahren nach einem der Ansprüche 1 bis 18 steuert.

20. Funkkommunikationssystem mit einer Basisstation, einer Basisstationsteuerung, einer Transkodiereinheit (transcoding and rate adaptation unit), einer Mobilvermittlungsstelle und/oder einem Paketdatendienstknoten, das derart ausgestaltet ist, dass darin der Ablauf eines Verfahrens nach einem der Ansprüche 1 bis 18 auf mindestens einer der Schnittstellen zwischen Basisstation und Basisstationssteuerung, Basisstationssteuerung und Transkodiereinheit, Transkodiereinheit und Mobilvermittlungsstelle und/oder Basisstationssteuerung und Paketdatendienstknoten gesteuert wird.
